# EUROPEAN PATENT SPECIFICATION

(11) **EP 2 575 333 B1**
(45) Date of publication and mention of the grant of the patent: **18.07.2018**
(21) Application number: 12185687.6
(22) Date of filing: 24.09.2012
(51) Int. Cl.: H04M 1/725, H04N 5/232

(54) **Portable terminal for remote controlling an imaging processing device**
Tragbares Endgerät zum Fernsteuern von bildverabeitenden Geräten
Terminal portable commandant à distance un dispositif d'imagerie

(30) Priority: 30.09.2011 JP 2011217501
(43) Date of publication of application: 03.04.2013
(73) Proprietor: Brother Kogyo Kabushiki Kaisha, Nagoya, Aichi 467-8561 (JP)
(72) Inventor: Suzuki, Nobuhiko, Nagoya-shi, Aichi 467-8562 (JP)
(74) Representative: J A Kemp

(56) References cited:
- EP-A1- 1 677 520
- WO-A1-2004/054241
- WO-A1-2008/118642
- US-A1- 2007 109 417
- US-A1- 2007 285 498
- US-A1- 2010 037 184
- US-A1- 2011 058 052
- US-B1- 6 573 883
- US-B1- 6 809 759

## Description

### FIELD OF DISCLOSURE

The technique disclosed in this description relates to a portable terminal which is capable of carrying out wireless communication with an image processing device.

### BACKGROUND

An image forming device provided with plural keys has been proposed. A user can designate processes to be carried out by the image forming device and set values to be used in the processes by manipulating the plural keys. US 2007/0109417 A discloses methods of controlling a remotely located image capturing device from a portable communication device including receiving man-machine interface (MMI) data at the portable communication device from the image capturing device. The MMI data may include a set of screen data related to a screen intended for presentation on a display of the portable communication device, and the set of screen data may include a selectable command related to the screen. The methods further include receiving media data from the image capturing device, presenting the media data at the portable communication device together with the at least one set of screen data, selecting the command, and sending the selected command to the image capturing device.

### SUMMARY

In this description, a technique to enable a user to more easily designate setting options for the carrying out of the image processing using a portable terminal may be provided. According to the present invention there is provided a portable terminal as defined in appended claim 1 and a method as defined in appended claim 9.

An aspect of this disclosure may include a portable terminal which may be configured to carrying out wireless communication with an image processing device. The portable terminal may be provided with a reception unit, a display control unit, a selection unit, and a transmission unit. These may be provided as means configured to carry out their respective functions. The reception unit may receive selection information from the image processing device. The selection information may include information which represents a plurality of setting options for the image processing carried out by the image processing device. The display control unit may cause a selection screen to be displayed on a display unit of the portable terminal in accordance with the selection information. The selection screen may display at least one setting option from among the plurality of setting options. The selection unit may allow a user to select a setting option, this user selected setting option being described as a particular setting option. The particular setting option may be selected from among the plurality of setting options by moving the entire portable terminal while the selection screen is displayed. The transmission unit may transmit, to the image processing device, data representing the particular setting option selected with the selection unit. This data is described as item data.

According to this configuration, the user may designate the particular setting option from among the plurality of setting options by moving the entire portable terminal. In this case, the portable terminal may select the particular setting option designated by the user and transmit the item data which represents the particular setting option to the image processing device. Therefore, the image processing device may carry out the image processing in accordance with the particular setting option. According to this technique, the user may more easily designate the particular first kind of setting option for the image processing.

The portable terminal may further establish a wireless communication session, such as a short-range wireless communication session in which the portable terminal may communicate with the image processing device when a distance between the portable terminal and the image processing device is shorter than a predetermined distance. Further, the communication session may be terminated (e.g., the portable terminal may be disconnected from the image processing device) when the distance from the portable terminal to the image processing device becomes longer than the predetermined distance. In other words, a communication session may be established when the portable terminal moves to within a short range of the image processing device and may be disconnected when the portable terminal moves out of that range. The reception unit may receive the selection information from the image processing device during a first communication session. The transmission unit may transmit the item data to the image processing device using a second communication session which is established after the first communication session is disconnected. According to this configuration, the user may designate the particular setting option after the selection information is received using the first communication session in a state in which the portable terminal is kept away from the image processing device (i.e., a state in which the first communication session is disconnected). This configuration may enable the user to more easily designate the particular setting option.

The selection unit may select the particular setting option with the establishment of the second communication session as a trigger after the first communication session is disconnected. According to this configuration, when the user moves the portable terminal close to the image processing device, the portable terminal may select the particular setting option. Manipulation of a key of the portable terminal by the user to cause the portable terminal to select the particular setting option may be unnecessary.

The reception unit may receive the first selection information and the second selection information from the image processing device using the first communication session. The second selection information may include information which represents a plurality of second setting options related to the particular first setting option. The display control unit may further cause a second selection screen to be displayed on the display unit in accordance with the second selection information. The second selection screen may display at least one second setting option from among the plurality of second setting options. The selection unit may further select a particular second setting option from among the plurality of second setting options in accordance with additional movement of the entire portable terminal. For example, a user may designate the particular second setting option from among the plurality of second setting options by moving (e.g., tilting, rotating, etc.) the portable terminal while the second selection screen is displayed. The transmission unit may further transmit the first item data and second item data, which represents the particular second setting option, to the image processing device using the second communication session. According to this configuration, the user may more easily designate the particular second setting option for the image processing using the portable terminal. The portable terminal may transmit the first and second item data to the image processing device using the second communication session. Therefore, the image processing device may carry out the image processing properly in accordance with the first and second item data which are received using the second communication session.

The selection unit may select the particular first setting option with the user manipulation of a first button (e.g., a key on a keypad, a virtual button on a touchscreen, etc.) of the portable terminal as a trigger in a state in which the first selection screen is displayed on the display unit. Further, the selection unit may select the particular second setting option with the user manipulation of a second button (which may include, e.g., the same key on a keypad or area on a touchscreen as the first button) of the portable terminal as a trigger in a state in which the second selection screen is displayed on the display unit. According to this configuration, the portable terminal may also select various setting options in response to the manipulation of buttons by a user.

The display control unit may cause the first selection screen to be displayed on the display unit such that the user may recognize which setting option has been designated from among the plurality of setting options. The display control unit may cause the first selection screen to be displayed on the display unit such that the setting option designated from among the plurality of setting options changes as the first operation proceeds. This configuration may enable the user to more easily know the setting option being designated.

The selection information may include a plurality of pieces of display data (e.g., text data) which represent a plurality of setting options, respectively. The display control unit may generate a selection screen using the pieces of display data and cause the generated selection screen to be displayed on the display unit. In some embodiments, the display data may be text data so that the amount of data exchanged during a communication session is relatively low (e.g., low in comparison to image data for displaying the same information).

The portable terminal may further be provided with a posture sensor which detects the posture of the portable terminal. In some embodiments, when a process of the instant disclosure is carried out, the selection unit may select the particular setting option in accordance with the posture of the portable terminal detected by the posture sensor. According to this example configuration, the portable terminal may allow a user to more easily and/or more quickly select setting options.

A control method, a computer program, and a computer-readable recording medium in which the computer program is stored for the implementation of the above-described portable terminal are also novel and useful.

Other objects, features, and advantages will be apparent to persons of ordinary skill in the art from the following detailed description of the disclosure and the accompanying drawings.

### DESCRIPTION OF THE DRAWINGS

Fig. 1 illustrates an example configuration of a communication system.
Fig. 2 illustrates an example state in which a portable terminal is tilted.
Fig. 3 illustrates an example hierarchical relationship of setting options.
Fig. 4 illustrates an example flowchart of a portable terminal process of a first embodiment.
Fig. 5 illustrates an example flowchart of a multifunction device process of the first embodiment.
Fig. 6 illustrates an example sequence diagram of the first embodiment.
Fig. 7 illustrates an example sequence diagram continued from Fig. 6.
Fig. 8 illustrates an example flowchart of a portable terminal process of a second embodiment.
Fig. 9 illustrates an example flowchart of a multifunction device process of the second embodiment.
Fig. 10 illustrates an example sequence diagram of the second embodiment.
Fig. 11 illustrates an example flowchart of a portable terminal process of a third embodiment.
Fig. 12 illustrates an example flowchart of a multifunction device process of the third embodiment.
Fig. 13 illustrates an example sequence diagram of the third embodiment.

### DETAILED DESCRIPTION

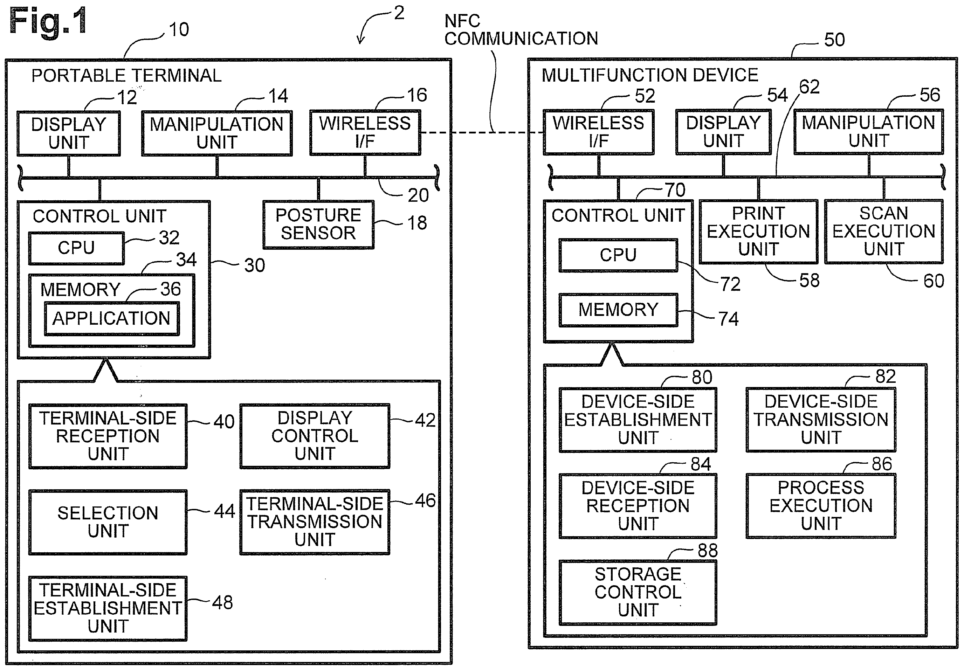

As illustrated in Fig. 1, a communication system 2 is provided with a portable terminal 10 and a multifunction device 50. Bidirectional communication can be established between the portable terminal 10 and the multifunction device 50 using short-range wireless communication. The short-range wireless communication of the present embodiment may be Near Field Communication (NFC).

The portable terminal 10 is provided with a display unit 12, a manipulation unit 14, a wireless interface 16 (hereinafter, "wireless I/F 16"), a posture sensor 18, and a control unit 30. These components 12 to 30 may be connected to a data bus 20. The display unit 12 may include a display for displaying various kinds of information. The manipulation unit 14 may include one or more keys (e.g., keys on a keypad, virtual buttons on a touchscreen, etc.). The wireless I/F 16 may be an interface for carrying out wireless communication, such as NFC communication, with a wireless I/F 52 of the multifunction device 50 which will be described later. The posture sensor 18 may detect the posture (e.g., orientation) of the portable terminal 10. For example, the posture sensor 18 may detect whether the portable terminal 10 is tilted and in which direction and by how much. In particular, the posture sensor 18 may detect a rotation angle. Further, the posture sensor 18 may output a signal indicating the posture to the control unit 30. The posture sensor 18 may be, for example, a gyro sensor.

The control unit 30 may be provided with a central processing unit (CPU) 32 and memory 34. The CPU 32 may perform various processes in accordance with programs, comprising computer-executable instructions, stored in the memory 34. The memory 34 may include, for example, ROM and RAM. The memory 34 may be used to store the programs executed by the CPU 32, data acquired or generated when the CPU 32 executes the processes, and/or other data. The memory 34 may be used to store an application 36, comprising computer-executable instructions, for communicating with the multifunction device 50. The application 36 may be installed from outside the portable terminal 10 (e.g., a server provided by a vendor of the multifunction device 50) or may be stored in the memory 34 as the portable terminal 10 is shipped. As shown in Fig. 1, the control unit 30 may function as a terminal-side reception unit 40, a display control unit 42, a selection unit 44, a terminal-side transmission unit 46, and a terminal-side establishment unit 48. For example, each function of the terminal-side reception unit 40, the display control unit 42, the selection unit 44, the terminal-side transmission unit 46, and the terminal-side establishment unit 48 may be implemented when the CPU 32 executes processes in accordance with the application 36.

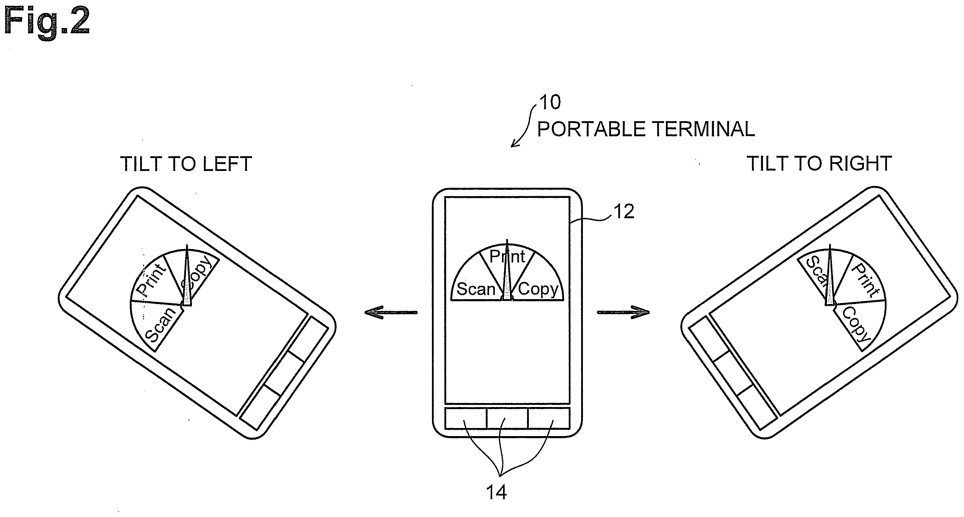

As illustrated in Fig. 2, the display unit 12 and the manipulation unit 14 may be disposed on one surface of the portable terminal 10. The user can change the content of the display screen of the display unit 12 by tilting the portable terminal 10. In an example of Fig. 2, a selection screen (i.e., a screen for selecting a print function, a copy function, and a scan function), which will be described later, is displayed on the display unit 12. In the central diagram of Fig. 2, the portable terminal 10 is not tilted to the right or the left, and the print function is designated by an arrow.

In a state in which the print function is designated, when the user moves the entire portable terminal 10 (e.g., rotates or tilts the portable terminal 10 to the right or the left), a signal output to the control unit 30 from the posture sensor 18 may change. Therefore, the posture sensor 18 may notify the display control unit 32 that the portable terminal 10 has been moved and a direction or rotation of the movement. For example, the posture sensor 18 may output a signal indicating whether the portable terminal has been tilted to the right or the left (or front and back). Then, the display control unit 32 may cause the displayed content of the selection screen to change so that the scan function or the copy function is identified as an intended selection. For example, the selection screen may be updated to point the arrow at either the scan setting or copy setting (see the right or left diagrams of Fig. 2). Thus, in the present embodiment, the user can designate a desired setting option by moving the entire portable terminal 10.

The multifunction device 50 can execute various functions including the print function, the scan function, and the copy function. The multifunction device 50 may be provided with a wireless I/F 52, a display unit 54, a manipulation unit 56, a print execution unit 58, a scan execution unit 60, and a control unit 70. Each of the units 52 to 70 may be connected to a data bus 62. The wireless I/F 52 may be an interface for carrying out NFC communication with the above-described wireless I/F 16. The display unit 54 may be a display for displaying various kinds of information. The manipulation unit 56 may include one or more keys (e.g., keys on a keypad, virtual buttons on a touchscreen, etc.). The print execution unit 58 may be provided with a printing mechanism, such as inkjet or laser printing system, and may perform printing in accordance with instructions from the control unit 70. The scan execution unit 60 may be provided with a scanning mechanism, such as a charge coupled device (CCD) or contact image sensor (CIS), and may perform scanning in accordance with instructions from the control unit 70.

The control unit 70 may be provided with a CPU 72 and memory 74. The CPU 72 may perform various processes in accordance with programs, comprising computer-executable instructions, stored in the memory 74. The memory 74 may include, for example, ROM, RAM, and hard disk. The memory 74 may be used to store the programs executed by the CPU 72, data acquired or generated when the CPU 72 executes the processes, and/or other data. As shown in Fig. 1, the control unit 70 may function as a device-side establishment unit 80, a device-side transmission unit 82, a device-side reception unit 84, a process execution unit 86, and a storage control unit 88. For example, each function of the device-side establishment unit 80, the device-side transmission unit 82, the device-side reception unit 84, the process execution unit 86, and the storage control unit 88 may be implemented when the CPU 72 executes processes in accordance with the programs described herein.

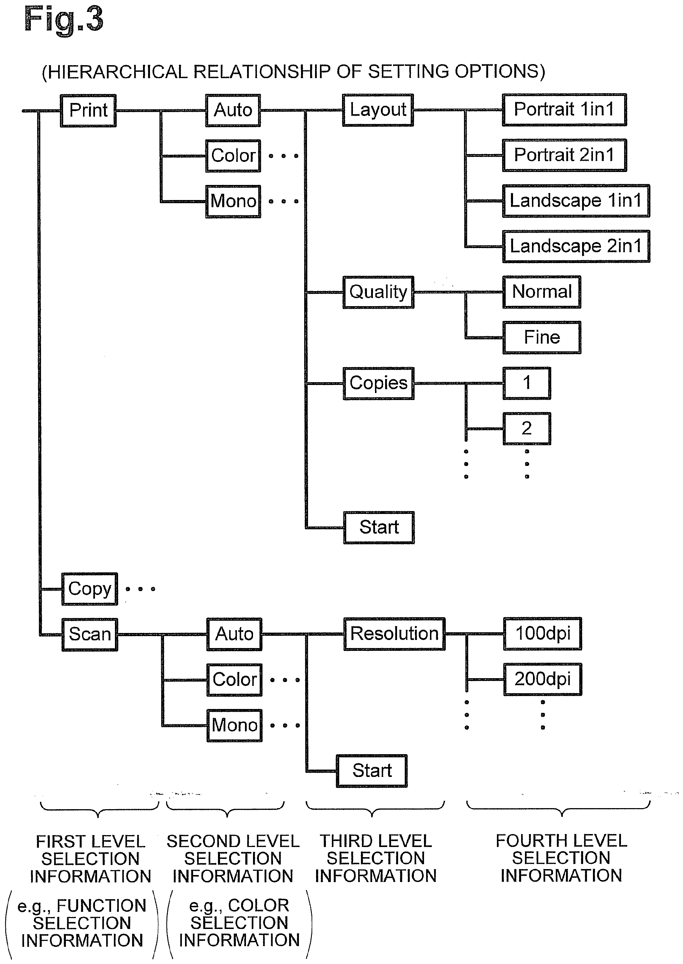

The memory 74 of the multifunction device 50 may be used to store various kinds of selection information for selecting various setting options for the portable terminal 10. In particular, the memory 74 may be used to store one or more levels of selection information (e.g., function selection information, color selection information), as illustrated in Fig. 3.

The first level selection information may include function selection information, which may include three pieces of display data: "Print," "Copy," and "Scan".

The second level selection information may include color selection information. As shown in Fig. 3, the color selection information is lower-level information of the function selection information. The color selection information may include three pieces of display data for displaying "Auto," "Color," and "Mono." As shown, "Auto," "Color," and "Mono" may be lower-level information of each of "Print," "Copy" and "Scan". "Color" and "Mono" of the color selection information for "Print" may correspond to a color print function and a monochrome print function, respectively. "Auto" of the color selection information for "Print" may correspond to an automatic color printing function which detects, in accordance with data to be printed, the number of colors (i.e., color or monochrome) automatically and carries out printing in accordance with the detected number of colors. Similarly, the color selection information for "Copy" may correspond to an automatic color copy function, a color copy function, and a monochrome copy function. The color selection information for "Scan" may correspond to an automatic color scan function, a color scanning function, and a monochrome scanning function.

The third level selection information may be lower-level information of the second level selection information (e.g., color selection information). The third level selection information may include four pieces of display data: "Layout," "Quality," "Copies," and "Start." These four pieces may be lower-level information of the color selection information (i.e., "Auto", "Color", "Mono") for both "Print" and "Copy". "Layout" may correspond to a print layout. "Quality" may correspond to an image quality of printing. "Copies" may correspond to a number of copies to be printed. "Start" may correspond to a trigger to start printing.

The third level selection information may further include other pieces of display data, such as "Resolution" and "Start," as lower-level information of the color selection information for "Scan" (i.e., "Auto", "Color", and "Mono"). "Resolution" may correspond to a scan resolution. "Start" may correspond to a trigger to start scanning.

The fourth level selection information is lower-level information of the third level selection information. The fourth level selection information may include four pieces of display data, for example, "Portrait 1-in-1", and "Landscape 2-in-1," as lower-level information of "Layout". "Portrait 1-in-1" may correspond to portrait printing of an image of one page on one print sheet, and "Landscape 2-in-1" may correspond to landscape printing of two pages on one print sheet.

The fourth level selection information may further include two other pieces of display data, "Normal" and "Fine," as lower-level information of "Quality". "Normal" may correspond to normal image quality. "Fine" may correspond to higher image quality than normal image quality. The fourth level selection information may further include other pieces of display data representing values of the number of copies to be printed, such as "1" and "2", as lower-level information of "Copies". The fourth level selection information may further include other pieces of display data representing values of scan resolution to be used when scanning, such as "100 dpi" and "200 dpi", as lower-level information of "Resolution". Also, as shown in Fig. 3, lower-level information of "Start" may not exist.

As described above, in the present embodiment, each piece of selection information may include a plurality of pieces of display data representing a plurality of setting options, respectively. Herein, the display data may be, for example, text data and/or image data. Text data may include data for a string of characters identifying a particular setting option. For example, a piece of text data may include the word "Copy" representing a copy function that may be selected. In some embodiments, the display data may be text data for the purpose of reducing the amount of data that is transmitted between the portable terminal 10 and the multifunction device 50. In other words, the display data used may be text data because the amount of data for displaying text to represent each piece of selection information may be smaller than the amount of data for displaying an image to represent each piece of selection information. Thus, by using text data to represent each piece of selection information, communication time between, for example, the portable terminal 10 and the multifunction device 50 may be shortened.

Next, a portable terminal process carried out by the portable terminal 10 will be described. The portable terminal process is started by the user manipulating the manipulation unit 14 and starting the application 36 stored in the memory 34.

In S10, the terminal-side establishment unit 48 may monitor a communication status of the portable terminal 10. For example, the terminal-side establishment unit 48 may determine whether an NFC communication session is established between the portable terminal 10 and the multifunction device 50. The NFC communication is a short-range wireless communication using radio waves of a band of approximately 13.56 MHz. When the user of the portable terminal 10 moves the portable terminal 10 close to the multifunction device 50 within the radio wave range of the portable terminal 10 and the multifunction device 50 (e.g., 10 cm), the terminal-side establishment unit 48 may establish the NFC communication session. A method of establishment of the NFC communication session is described in, for example, Japanese Unexamined Patent Application Publication No. 2004-364145.

When the NFC communication session is established, the terminal-side establishment unit 48 may determine that the result of S10 is YES, and the routine proceeds to S12. In S12, the terminal-side transmission unit 46 may transmit information for requesting function selection information (see Fig. 3) to the multifunction device 50 using the NFC communication session established in S10.

Subsequently, in S14, the terminal-side reception unit 40 may receive the function selection information from the multifunction device 50 using the NFC communication session established in S10. Upon reception of the function selection information, the control unit 30 may notify the user that the reception has been completed (here, the function selection information has been received). For example, at S15, the control unit 30 may cause the portable terminal 10 to ring, vibrate, flash a light, etc. With the notification in S15, the user knows that the portable terminal 10 can be moved away from the multifunction device 50. When the distance between the portable terminal 10 and the multifunction device 50 becomes greater than the radio wave range of the portable terminal 10 and the multifunction device 50, the NFC communication session established in S10 is disconnected. However, where the function selection information is received before the disconnection occurs, the user may operate the portable terminal 10 to make selections even when the portable terminal 10 is outside the range for communicating with the multifunction device 50.

Next, in S16, the display control unit 42 may generate a selection screen using three kinds of display data (e.g., text data for displaying "Print", "Copy", and "Scan") included in the function selection information received in S14. The application 36 may include template data for generating the selection screen (i.e., data representing a sector in Fig. 2). The display control unit 42 may write each text (e.g., "Print") in three areas obtained by dividing the sector into three, and may control an arrow to point at "Print". Therefore, the selection screen illustrated in the central diagram of Fig. 2 (i.e., the selection screen in which three setting options are illustrated) may be obtained. Next, the display control unit 42 may cause the generated selection screen to be displayed on the display unit 12.

If the user wants to designate the setting option, the user may move the entire portable terminal 10 (e.g., may tilt or rotate the portable terminal 10). In this case, the posture sensor 18 may detect the change of posture of the portable terminal 10, and may output the detection result to the control unit 30. In this case, the display control unit 42 may determine that the result of S18 is YES, and the routine may return to S16. When returning to S16, the display control unit 42 may generate a new selection screen with an arrow pointing in a different direction (e.g., a selection screen which includes an arrow pointing at "Copy") in accordance with the output of the posture sensor 18, and may cause the new selection screen to be displayed on the display unit 12. By updating the selection screen, the user may be informed of the setting option being designated. S18 may cause S16 to be repeated a number of times until the portable terminal 10 stops changing position and/or In some embodiments, the display control unit 42 may cause the color of the designated setting option to differ from the color of the rest of the setting options, and/or may cause the size of the designated setting option to differ from the size of the rest of the setting options. Thus, the display control unit 42 may cause the selection screen to be displayed on the display unit 12 in a manner in which the designated setting option can be recognized by the user.

When a determination that the position of the portable terminal 10 has not changed is made in S18, the process may proceed to S20. In some embodiments, this determination will be made if the portable terminal maintains a position for a predetermined time period. For example, if the portable terminal 10 remains tilted to the left for a predetermined time period, the portable terminal 10 may lock in that position and S18 may determine that the position has not changed thereby proceeding to S20.

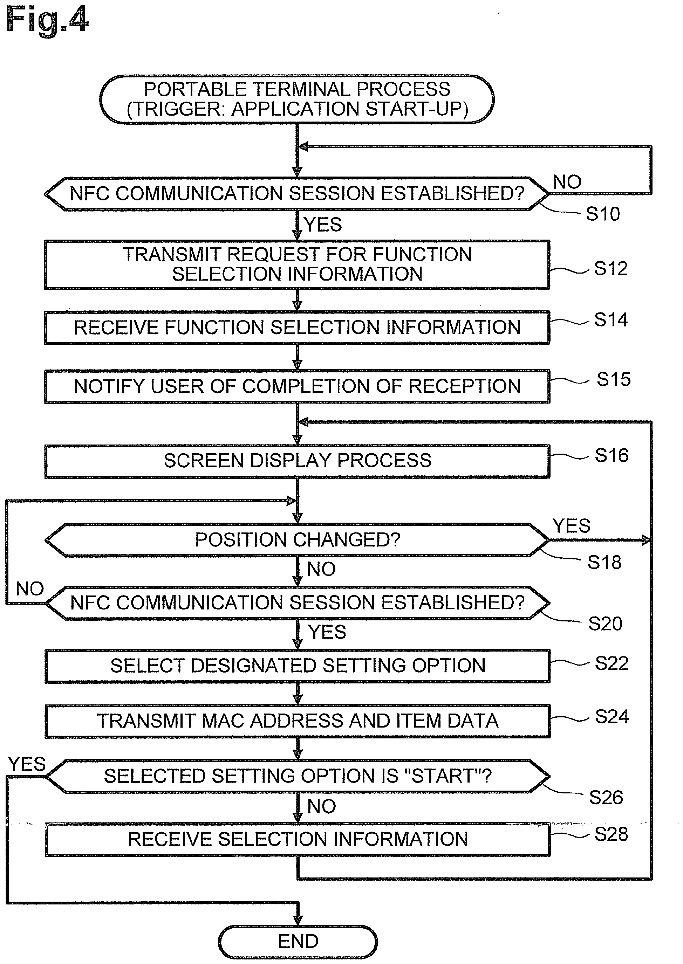

At S20, the portable terminal 10 may determine whether a communication session is established. The user may move the portable terminal 10 close to the multifunction device 50 in a state in which a desired setting option (e.g., "Copy") is selected. As described in S10, when the portable terminal 10 and the multifunction device 50 are located within the radio wave range of the portable terminal 10 and the multifunction device 50, the terminal-side establishment unit 48 may establish the NFC communication session. As shown in Fig. 4, S18 may be repeated until it is determined that a communication session is established. Accordingly, the most recent position of the portable terminal 10 may be obtained so that the proper selection may be received. Upon establishment of the NFC communication session, the terminal-side establishment unit 48 determines that the result of S20 is YES. In this case, the routine proceeds to S22. In some embodiments, where the communication session established in S10 has not been disconnected (e.g., where the portable terminal has not been moved out of range from the multifunction device 50), S20 may check to make sure that the communication session is still established. If it is still established, the process may proceed to S22.

In S22, the selection unit 44 may select the setting option pointed by the arrow on the selection screen (i.e., the setting option designated by the user). In this manner, the selection unit 44 can select the setting option designated by the user in accordance with the posture (e.g., orientation) of the portable terminal 10 detected by the posture sensor 18. In the present embodiment, the selection unit 44 can automatically select the setting option designated by the user with the establishment of the NFC communication session as a trigger even if the manipulation unit 14 is not manipulated by the user.

Subsequently, in S24, the terminal-side transmission unit 46 may transmit a MAC address of the portable terminal 10, and item data which represents the setting option selected in S22 (e.g., "Copy") to the multifunction device 50 using the NFC communication session established in S20. Hereinafter, the MAC address of the portable terminal 10 will be referred to as "M10".

In S26, the selection unit 44 may determine whether or not the setting option selected in S22 is "Start" which may be included in the third level selection information. If the selecting option selected in S22 is not "Start" (S26: NO), the routine may proceed to S28.

In S28, the terminal-side reception unit 40 may receive the selection information from the multifunction device 50 using the NFC communication session established in S20. The terminal-side reception unit 40 may receive the lower-level selection information of the selection information which is received the last time from the multifunction device 50. For example, as illustrated in Fig. 3, if the selection information received the last time from the multifunction device 50 is the function selection information, the terminal-side reception unit 40 may receive the color selection information in S28. If the selection information received last time from the multifunction device 50 is the fourth level selection information, no lower-level selection information may exist. In this case, the terminal-side reception unit 40 may receive the third level selection information in S28.

After the process of S28, the control unit 30 may cause the portable terminal 10 to, for example, ring in S15. This notifies the user that the reception has been completed (here, the lower-level selection information of the selection information received last time has been received). With the notification in S15, the user knows that the portable terminal 10 can be moved away from the multifunction device 50. If the portable terminal 10 moves out of communication range from the multifunction device 50, the NFC communication session established in S20 may be disconnected.

In subsequent S16, using selection information received by S28, display control unit 42 may generate a new selection screen (e.g., a selection screen in which "Auto", "Color", and "Mono" are displayed), and may cause the new selection screen to be displayed on the display unit 12. The remaining steps (e.g., steps after S18) may be the same as those described above. If it is determined that the result of S26 is YES, the portable terminal process may be completed.

Subsequently, the multifunction device process carried out by the multifunction device 50 will be described. In S40, the device-side establishment unit 80 may monitor whether or not the NFC communication session is established. If the NFC communication session is established (S40: YES), the routine may proceed to S42.

In S42, the device-side reception unit 84 may determine whether or not information to request the function selection information has been received from the portable terminal 10 using the NFC communication session established in S40 (see S12 of Fig. 4). If the information has been received, the device-side reception unit 84 may determine that the result of S42 is YES and the routine may proceed to S44. If the information has not been received, the device-side reception unit 84 may determine that the result of S42 is NO and the routine may proceed to S46.

In S44, device-side transmission unit 82 may transmit the function selection information to the portable terminal 10 using the NFC communication session established in S40, and the routine may return to S40. Although not illustrated in the flowchart, when the function selection information is transmitted in S44, the NFC communication session established in S40 may be disconnected. In some embodiments, in S44, the device-side transmission unit 82 may transmit the function selection information and additional lower-level selection information, such as the color selection information. Thus, in some embodiments, the device-side transmission unit 82 may transmit more information than requested by the portable terminal 10.

In S46, the device-side reception unit 84 may determine whether or not the MAC address "M10" of the portable terminal 10 and the item data have been received from the portable terminal 10 using the NFC communication session established in S40 (see S24 of Fig. 4). If the device-side reception unit 84 receives the MAC address "M10" and/or the item data, it may be determined that the result of S46 is YES and the routine may proceed to S48. If the device-side reception unit 84 determines that the MAC address "M10" and/or the item data have not been received, it may be determined that the result of S46 is NO and the routine may proceed to S42.

In S48, the device-side reception unit 84 may determine whether or not the setting option represented by the item data received in S46 is "Start". If the setting option is not "Start", the device-side reception unit 84 may determine that the result of S48 is NO, and the routine may proceed to S50. If the setting option is "Start", the device-side reception unit 84 may determine that the result of S48 is YES, and the routine may proceed to S54.

In S50, the storage control unit 88 may correlate the MAC address "M10" with the item data which are received in S46, and may cause the correlated MAC address "M10" and the item data to be stored in the memory 74. In steps to carry out the process of S50 for the second time and afterwards, the "M10" and the item data may already be stored in the memory 74. Therefore, in the process of S50 for the second time and afterwards, the storage control unit 88 may further correlate the "M10" with the item data which have already been stored in the memory 74, and may cause the item data newly received to be stored in the memory 74 in S46.

Next, in S52, the device-side transmission unit 82 may transmit the lower-level selection information of the setting option represented by the item data received in S46 to the portable terminal 10 using the NFC communication session established in S40. For example, if the item data received in S46 represents "Copy", the device-side transmission unit 82 may transmit the color selection information to the portable terminal 10 in S52. Then, if the item data received in S46 represents "Mono," the device-side transmission unit 82 may transmit the third level selection information including, for example, "Layout" to the portable terminal 10 in S52. Then, if the item data received in S46 represents "Copies", the device-side transmission unit 82 may transmit the fourth level selection information including, for example, "1" or "2" which represents the number of copies, to the portable terminal 10 in S52. Then, if the item data received in S46 represents "3" and no lower-level selection information exists, then the device-side transmission unit 82 may again transmit the third level selection information including, for example, "Layout" to the portable terminal 10 in S52. After the process of S52, the routine may proceed to S40.

In S54, the process execution unit 86 may read, from the memory 74, each piece of item data correlated with the MAC address "M10" received in S46. Next, the process execution unit 86 may perform image processing in accordance with each piece of read item data.

In some embodiments, "Copy" and "Mono" may be stored in the memory 74. In this example, item data representing the layout, image quality, and the number of copies may not be stored in the memory 74. Thus, if a setting option not stored in the memory 74 exists, the process execution unit 86 may use default setting options (e.g., "Layout: Portrait 1-in-1", "Quality: Normal", and "Copies: 1") which are previously set in the multifunction device 50. In this example, the process execution unit 86 may perform the first image processing (e.g., issues an instruction to scan to the scan execution unit 60) to cause the scan execution unit 60 to carry out monochrome scanning of an original document at normal image quality (i.e., normal scan resolution). Next, the process execution unit 86 may perform second image processing (e.g., a halftoning process) to generate print data for 1-in-1 portrait printing in accordance with the scanning data obtained by the monochrome scanning. Next, the process execution unit 86 may perform third image processing (e.g., supplies the print data to the print execution unit 58) to cause the print execution unit 58 to carry out printing in accordance with the print data. In this manner, the monochrome copy function may be implemented.

In some embodiments, "Print" and "Color" may be stored in the memory 74. In this case, the process execution unit 86 may perform the first image processing (e.g., a resolution conversion process to the normal print resolution, RGB-to-CMYK color conversion, and a halftoning process) to generate print data for 1-in-1 portrait printing at the normal print resolution in accordance with the data to be printed which has been designated by the user (e.g., the data acquired from an external storage unit, such as a USB memory connected to the multifunction device 50). Next, the process execution unit 86 may perform second image processing (e.g., supplies the print data to the print execution unit 58) to cause the print execution unit 58 to carry out printing in accordance with the print data. In this manner, the color print function may be implemented. In this example, in a state in which "Fine" is further stored in the memory 74, the process execution unit 86 may perform the resolution conversion process to increase the print resolution to be higher than the normal print resolution in the first image processing. In this example, in a state in which "Landscape 2-in-1" is further stored in the memory 74, the process execution unit 86 may generate the print data for 2-in-1 landscape printing in the first image processing.

As described above, in S54, the process execution unit 86 may perform image processing in accordance with each setting option represented by each piece of item data received in S46 (i.e., each setting option designated by the user of the portable terminal 10). After the process of S54, the multifunction device process may be completed.

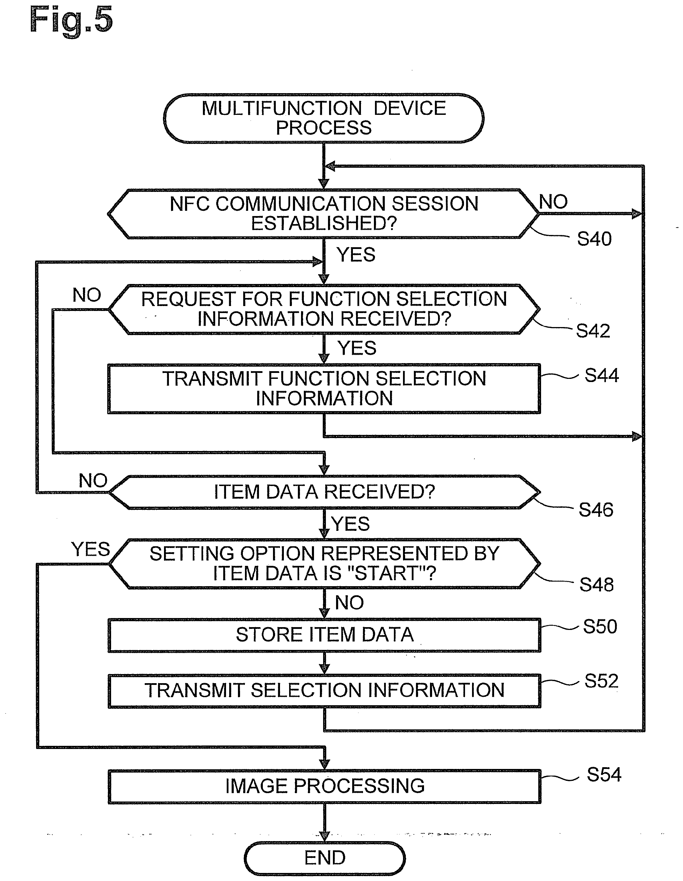

Next, an example of the first embodiment will be described. When the user moves the portable terminal 10 close to the multifunction device 50, an NFC communication session S1 is established (S10 of Fig. 4: YES, S40 of Fig. 5: YES). In this case, the multifunction device 50 may transmit the function selection information (e.g., "Print") using the NFC communication session S1 (S44 of Fig. 5). Therefore, the portable terminal 10 may receive the function selection information during the NFC communication session S1 (S14 of Fig. 4).

When the user moves the portable terminal 10 away from the multifunction device 50, the NFC communication session S1 is disconnected. The portable terminal 10 may cause the selection screen which includes a plurality of setting options included in the function selection information to be displayed on the display unit 12 (S16 of Fig. 4). When the user changes the posture (or orientation) of the portable terminal 10, the portable terminal 10 may cause a new selection screen to be displayed on the display unit 12 with the arrow pointing in a different direction (S16 which is carried out by if YES at S18 of Fig. 4).

For example, when the user moves the portable terminal 10 close to the multifunction device 50 in a state in which "Copy" is designated, an NFC communication session S2 may be established (S20 of Fig. 4: YES, S40 of Fig. 5: YES). The establishment of the NFC communication session S2 may trigger the portable terminal 10 to select "Copy" (S22 of Fig. 4). Next, the portable terminal 10 may transmit the MAC address "M10" of the portable terminal 10 and the item data representing "Copy" to the multifunction device 50 using the NFC communication session S2 (S24 of Fig. 4). The multifunction device 50 may receive "M10" and the item data representing "Copy" from the portable terminal 10 using the NFC communication session S2 (S46 of Fig. 5: YES). The multifunction device 50 may correlate "M10" with the item data representing "Copy" and may cause the correlated "M10" and the item data representing "Copy" to be stored in the memory 74 (S50 of Fig. 5).

Next, the multifunction device 50 may transmit the color selection information (e.g., "Auto") to the portable terminal 10 using the NFC communication session S2 (S52 of Fig. 5). The portable terminal 10 may receive the color selection information using the NFC communication session S2 (S28 of Fig. 4). When the user moves the portable terminal 10 away from the multifunction device 50, the NFC communication session S2 may be disconnected. The portable terminal 10 may cause the selection screen which includes the plurality of setting options included in the color selection information to be displayed on the display unit 12 (S16 of Fig. 4).

For example, when the user moves the portable terminal 10 close to the multifunction device 50 in a state in which "Mono" is designated, an NFC communication session S3 may be established (S20 of Fig. 4: YES, S40 of Fig. 5: YES), and the establishment may trigger the portable terminal 10 to select "Mono" (S22 of Fig. 4). Next, the portable terminal 10 may transmit "M10" and item data representing "Mono" to the multifunction device 50 using the NFC communication session S3 (S24 of Fig. 4). The multifunction device 50 may receive "M10" and the item data representing "Mono" from the portable terminal 10 using the NFC communication session S3 (S46 of Fig. 5: YES). The multifunction device 50 may cause the item data representing "Mono" to be stored in the memory 74 in a correlated manner with the "M10" and the item data representing "Copy" which have already been stored (S50 of Fig. 5).

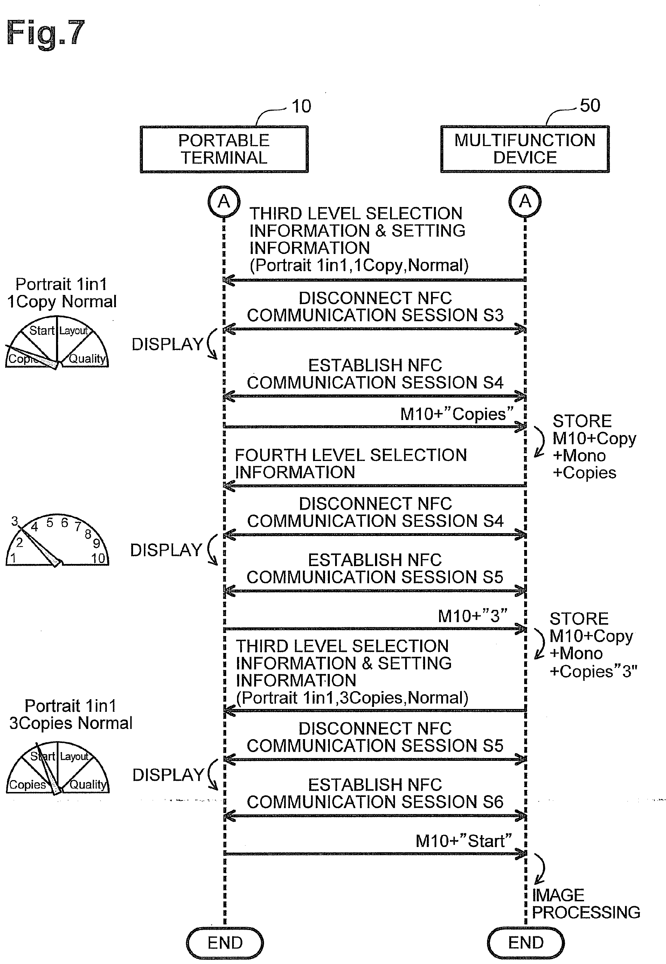

Next, as illustrated in Fig. 7, the multifunction device 50 may transmit "Copy" and the third level selection information (e.g., "Layout") corresponding to "Mono," and the setting information to the portable terminal 10 using the NFC communication session S3 (S52 of Fig. 5). Although not described in the flowcharts of Figs. 4 and 5, the setting information may be information which represents previously determined default setting options from among the plurality of setting options included in the fourth level selection information. The portable terminal 10 may receive the third level selection information and the setting information using the NFC communication session S3 (S28 of Fig. 4). Then, the NFC communication session S3 may be disconnected. The portable terminal 10 may cause the selection screen which includes a plurality of setting options included in the third level selection information to be displayed on the display unit 12 (S16 of Fig. 4). Here, the portable terminal 10 may (i.e., the display control unit 42) further cause each setting option represented by the setting information (e.g., "Portrait 1-in-1") to be displayed on the selection screen. Then, by designating "Start", the user can instruct the multifunction device 50 to carry out the image processing in accordance with each setting option represented by the setting information.

For example, when the user moves the portable terminal 10 close to the multifunction device 50 in a state in which "Copies" is designated, an NFC communication session S4 may be established (S20 of Fig. 4: YES, S40 of Fig. 5: YES). In the same manner as described above, the portable terminal 10 may select "Copies" (S22 of Fig. 4), and transmit "M10" and the item data representing "Copies" to the multifunction device 50 (S24 of Fig. 4). The multifunction device 50 may cause the item data representing "Copies" to be stored in the memory 74 (S50 of Fig. 5).

The multifunction device 50 may transmit the fourth level selection information (e.g., "1" or "2") corresponding to "Copies" to the portable terminal 10 using the NFC communication session S4 (S52 of Fig. 5). Then, the NFC communication session S4 may be disconnected. The portable terminal 10 may cause the selection screen which includes a plurality of setting options included in the fourth level selection information to be displayed on the display unit 12 (S16 of Fig. 4).

For example, when the user moves the portable terminal 10 close to the multifunction device 50 in a state in which "3" is designated, an NFC communication session S5 may be established (S20 of Fig. 4: YES, S40 of Fig. 5: YES). In the same manner as described above, the portable terminal 10 may select "3" (S22 of Fig. 4), and may transmit "M10" and the item data representing "3" to the multifunction device 50 (S24 of Fig. 4). The multifunction device 50 may cause the item data representing "3" to be stored in the memory 74 (S50 of Fig. 5).

The multifunction device 50 may transmit the third level selection information (e.g., "Layout") and the setting information to the portable terminal 10 using the NFC communication session S5 (S52 of Fig. 5). In the setting information transmitted here, "1" which represents the default number of copies is changed to "3" represented by the item data received from the portable terminal 10. Then, the NFC communication session S5 may be disconnected. The portable terminal 10 may cause the selection screen to be displayed on the display unit 12 in the same manner as described above (S16 of Fig. 4). Since the number of copies represented by the setting information has been changed to "3", "3" may be displayed on the selection screen.

For example, when the user moves the portable terminal 10 close to the multifunction device 50 in a state in which "Start" is designated, an NFC communication session S6 may be established (S20 of Fig. 4: YES, S40 of Fig. 5: YES). In the same manner as described above, the portable terminal 10 may select "Start" (S22 of Fig. 4), and may transmit "M10" and the item data representing "Start" to the multifunction device 50 (S24 of Fig. 4). In this case, the multifunction device 50 may carry out the image processing in accordance with all the item data (i.e., "Copy", "Mono", "Copies", and "3") which are correlated with "M10" in the memory 74 (and other default setting options) (S54 of Fig. 5).

According to the present embodiment, the user can designate the setting option for carrying out the image processing in the multifunction device 50 using the portable terminal 10, and can transmit the item data to the multifunction device 50. Therefore, it is might not be necessary to provide a key for designating the setting option in the multifunction device 50. As a result, it may be possible to cause the multifunction device 50 to properly carry out the image processing in accordance with setting options represented by the item data using a smaller number of keys of the multifunction device 50.

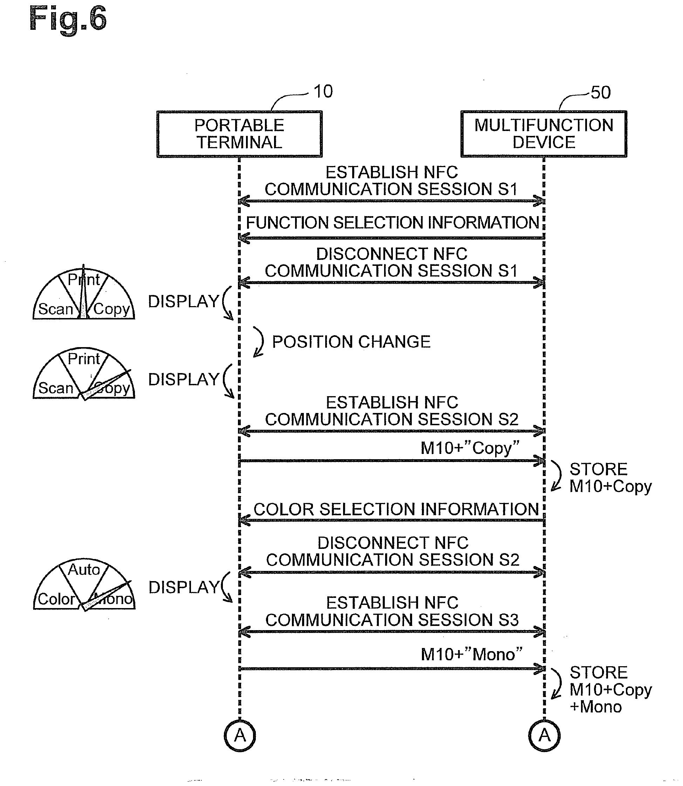

As illustrated in Figs. 6 and 7, the user can designate one of the setting options from among the plurality of setting options by moving the entire portable terminal 10 even if the user does not manipulate the manipulation unit 14 of the portable terminal 10. Even if the manipulation unit 14 of the portable terminal 10 is not manipulated by the user, the portable terminal 10 may automatically select one setting option designated by the user upon establishment of the NFC communication session, and may transmit the item data representing the selected one setting option to the multifunction device 50. In this manner, the user can easily designate, using the portable terminal 10, the setting option for carrying out the image processing in the multifunction device 50, without manipulation of, for example, the keys.

After the function selection information is received using the NFC communication session S1, for example, the user can designate the setting option in a state in which the portable terminal 10 is moved away from the multifunction device 50 (i.e., a state in which the communication session S1 is disconnected). Therefore, the user can designate the setting option in an easier manner than in a configuration in which the user needs to designate the setting option in a state in which the portable terminal 10 is moved close to the multifunction device 50.

The portable terminal 10 transmits the MAC address "M10" of the portable terminal 10 and the item data representing the setting option to the multifunction device 50. Thus, the multifunction device 50 can correlate "M10" with the item data, and may cause the correlated "M10" and the item data to be stored in the memory 74. Therefore, even if the NFC communication session is disconnected, the multifunction device 50 can properly recognize the item data transmitted from the portable terminal 10 and, as a result, can properly carry out the image processing in accordance with the setting option represented by the item data.

The multifunction device 50 is an example of an "image processing device". The NFC communication session is an example of a "communication session of short-range wireless communication". The function selection information, the color selection information, the third level selection information, and the fourth level selection information are examples of various types of "selection information". For example, if the color selection information is an example type of "selection information", "Auto, Color, and Mono" are examples of "the plurality of setting options". In this case, "Color" selected in Fig. 6 is an example of a "particular setting option". The NFC communication session S2 is an example of a "first communication session" and the NFC communication session S3 is an example of a "second communication session".

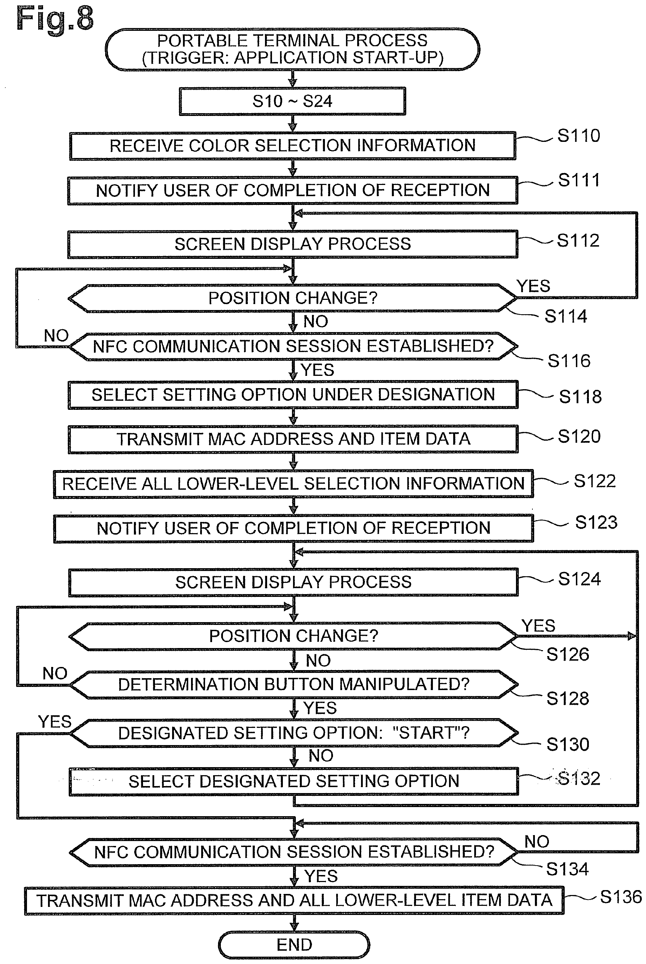

In another embodiment, a portable terminal process of Fig. 8 is carried out instead of the portable terminal process of Fig. 4. First, a control unit 30 may carry out processes of S10 to S24 of Fig. 4. Then, a terminal-side reception unit 40 may receive function selection information from a multifunction device 50 (S14 of Fig. 4). A selection unit 44 may select a setting option (e.g., "Copy") designated by the user with the establishment of the NFC communication session as a trigger (S22). A terminal-side transmission unit 46 may transmit item data representing the selecting option selected in S22 (e.g., "Copy") to the multifunction device 50 (S24). In S110, the terminal-side reception unit 40 may receive color selection information from the multifunction device 50.

Processes of S111 to S120 may be similar to those of S15 to S24 of Fig. 4. The selection unit 44 may select a setting option (e.g., "Mono") designated by the user with the establishment of the NFC communication session as a trigger (S118). The terminal-side transmission unit 46 may transmit item data representing the selecting option selected in S118 (e.g., "Mono") to the multifunction device 50 (S120).

Next, in S122, the terminal-side reception unit 40 may receive, from the multifunction device 50, both the third and fourth level selection information corresponding to the selecting option selected in S118 using the communication session established in S116.

In S123, the control unit 30 may cause the portable terminal 10 to ring. Then, the user may be notified that reception (here, reception of all the lower-level selection information) is completed, and the user may move the portable terminal 10 away from the multifunction device 50. Then, the NFC communication session established in S116 may be disconnected. In S124, the display control unit 42 generates a selection screen using the third level selection information from among the third and fourth level selection information received in S122, and may cause the generated selection screen to be displayed on a display unit 12.

In the present embodiment, the manipulation unit 14 may include a determination button. The user can manipulate the determination button in a state in which a desired setting option included in the third level selection information has been designated. In this case, the selection unit 44 may determine that the result of S128 is YES, and the routine may proceed to S130. In S130, the selection unit 44 may determine whether or not the setting option designated in S128 is "Start". If the setting option is "Start" (S130: YES), the routine may proceed to S134. If the setting option is not "Start" (S130: NO), the routine may proceed to S132.

In S132, the selection unit 44 may select the setting option designated in S128 (e.g., "Copies"). Specifically, manipulation of the determination button may trigger the selection unit 44 to select the setting option. After the process of S132, the routine may proceeds to S124. In S124, the display control unit 42 may generate a selection screen using the fourth level selection information (e.g., "1" or "2") corresponding to the setting option selected in S132 (e.g., "Copies") from among the third and fourth level selection information received in S122, and may cause the generated selection screen to be displayed on a display unit 12. Then, the user can manipulate the determination button in a state in which the desired setting option included in the fourth level selection information is designated (S128: YES). In this case, at S132, the selection unit 44 may select the setting option designated in S128 (e.g., "3"), and the routine may return to S124. In S124, the selection screen corresponding to the third level selection information may be displayed again.

In S134, the terminal-side transmission unit 46 may stand by until an NFC communication session is established. When the NFC communication session is established (S134: YES), the terminal-side transmission unit 46 may transmit "M10" and the setting data which represents all the setting options selected in S132 to the multifunction device 50 in S136. As described above, in S132, the setting option included in the third level selection information (e.g., "Copies") and the setting option included in the fourth level selection information (e.g., "3") may be selected. In this case, in S136, the terminal-side transmission unit 46 may transmit, to the multifunction device 50, both the item data representing the setting option included in the third level selection information and the item data representing the setting option included in the fourth level selection information. After the process of S136, the portable terminal process may be completed.

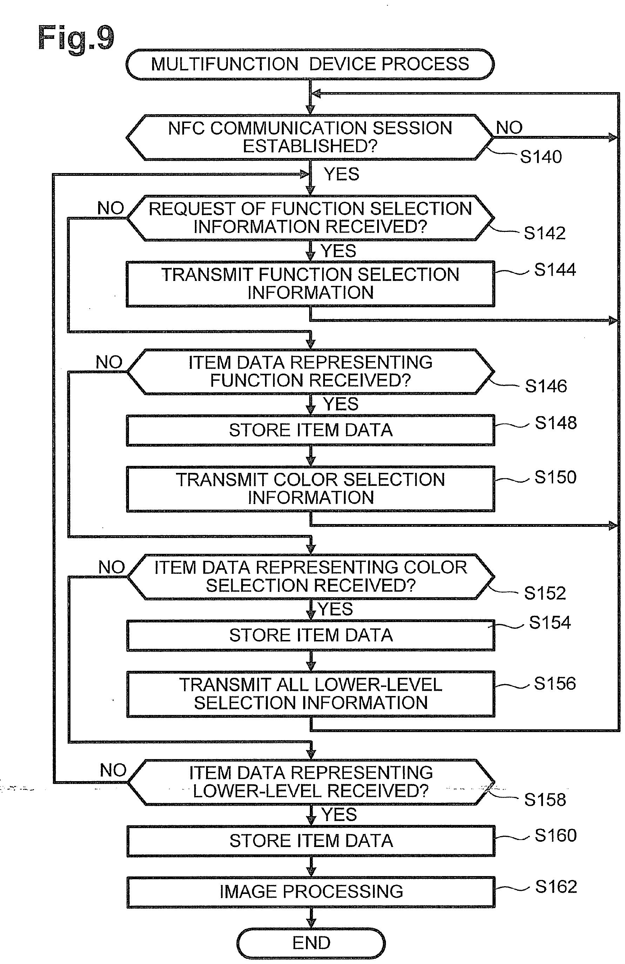

In yet another example embodiment, a multifunction device process of Fig. 9 may be carried out instead of the multifunction device process of Fig. 5. Processes of S140 to S144 may be similar to those of S40 to S44 of Fig. 5. In S146, a device-side reception unit 84 may determine whether or not the item data representing the setting option included in the function selection information has been received. If the determination result in S146 is YES, a storage control unit 88 may cause the item data received in S146 to be stored in memory 74 in S148. Next, in S150, a device-side transmission unit 82 may transmit the color selection information to the multifunction device 50.

In S152, the device-side reception unit 84 may determine whether or not the item data representing the setting option included in the color selection information has been received. If the determination result in S152 is YES, the storage control unit 88 may cause the item data received in S152 to be stored in the memory 74 in S154. Next, in S156, the device-side transmission unit 82 may transmit, to the multifunction device 50, the third and fourth level selection information which correspond to each lower-level setting option (e.g., "Copy" and "Mono") represented by each piece of item data received in S146 and S152.

In S158, the device-side reception unit 84 may determine whether or not the item data representing the setting option included in the third and fourth level selection information has been received (see S136 of Fig. 8). If the determination result in S158 is YES, the storage control unit 88 may cause the item data received in S158 to be stored in memory 74 in S160. Next, in S162, a process execution unit 86 may carry out image processing in a similar manner as in S54 of Fig. 5. After the process of S162, the multifunction device process may be completed.

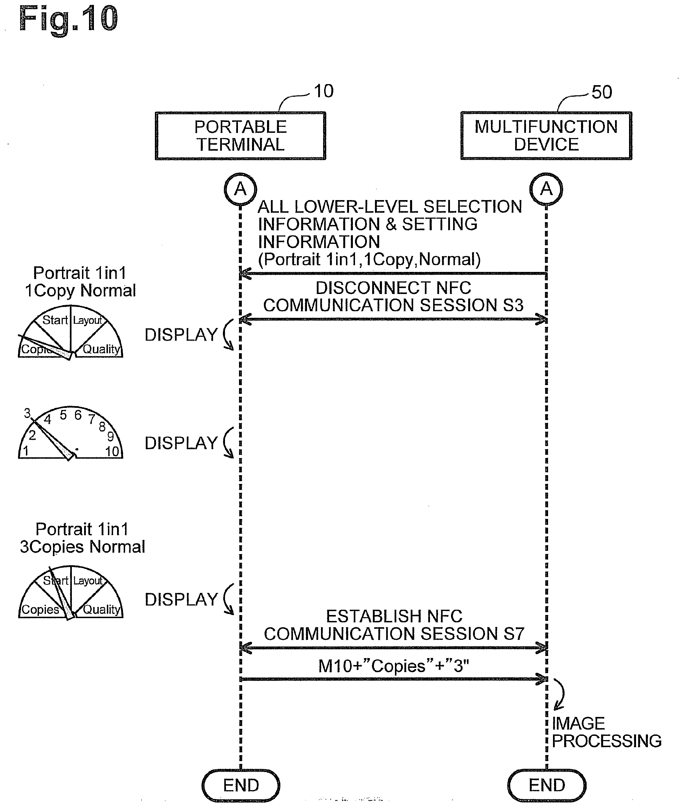

Next, an example of the second embodiment will be described with reference to Fig. 10. The processes may be similar to those of Fig. 6 until the multifunction device 50 causes the item data representing the setting option included in the color selection information to be stored. As illustrated in Fig. 10, the multifunction device 50 may transmit the third and fourth level selection information to the portable terminal 10 using a NFC communication session S3 (S156 of Fig. 9). Then, the NFC communication session S3 may be disconnected.

The portable terminal 10 may cause a selection screen which includes "Copy" and plural setting options (e.g., "Layout") included in the third level selection information corresponding to "Mono" to be displayed on the display unit 12 (S124 of Fig. 8). For example, the user may manipulate the determination button of the manipulation unit 14 in a state in which "Copies" is designated (S128 of Fig. 8: YES). In this case, the portable terminal 10 may cause a selection screen which includes a plurality of setting options (e.g., "1" and "2") included in the fourth level selection information corresponding to "Copies" to be displayed on the display unit 12 (S124 of Fig. 8).

For example, the user may manipulate the determination button of the manipulation unit 14 in a state in which "3" is designated (S128 of Fig. 8: YES). In this case, the portable terminal 10 may cause a selection screen which includes plural setting options (e.g., "Layout") included in the third level selection information to be displayed again on the display unit 12 (S124 of Fig. 8). Note that the number of copies "3" is displayed on the selection screen.

For example, the user manipulates the determination button of the manipulation unit 14 in a state in which "Start" is designated (S128 of Fig. 8: YES, S130 of Fig. 8: YES). Then, when the user moves the portable terminal 10 close to the multifunction device 50, an NFC communication session S7 may be established (S134 of Fig. 8: YES, S140 of Fig. 9: YES). The portable terminal 10 may transmit "M10", the item data representing "Copies", and the item data representing "3" to the multifunction device 50 using the NFC communication session S7 (S136 of Fig. 8). In this case, the multifunction device 50 may carry out image processing in accordance with all the item data (i.e., "Copy" and "Mono") correlated with "M10" in the memory 74 and in accordance with the item data received using the NFC communication session S7 (i.e., "Copies" and "3") (and other default setting options) (S162 of Fig. 9).

As illustrated in Fig. 10, the multifunction device 50 may transmit all the lower-level selection information (i.e., the third and fourth level selection information) to the portable terminal 10 using the NFC communication session S3. By using the determination button of the portable terminal 10, the user can designate one setting option from among the plural setting options included in the third level selection information, and can designate a particular setting option from among the plural setting options included in the fourth level selection information. According to the present embodiment, the user can reduce the number of operations to move the portable terminal 10 close to the multifunction device 50.

The third level selection information is an example of "a first type of selection information" and the fourth level selection information is an example of "a second type of selection information". Therefore, "Copies, Layout, and Quality" are examples of "a plurality of the first type of setting options". For example, "1 and 2" and so forth corresponding to the number of copies are examples of "a plurality of the fourth type of setting options". The NFC communication session S3 is an example of a "first communication session" and the NFC communication session S7 is an example of a "second communication session".

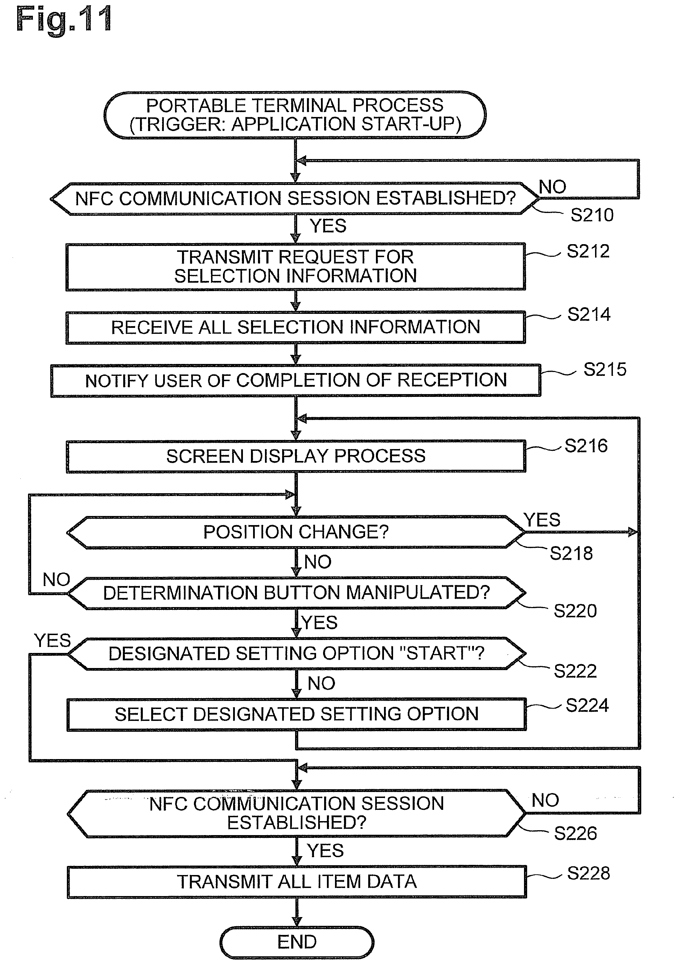

In still another example embodiment, a portable terminal process of Fig. 11 may be carried out instead of the portable terminal process of Fig. 4. The process of S210 may be similar to that of S10 of Fig. 4. In S212, the terminal-side transmission unit 46 may transmit information for requesting all the selection information (i.e., the function selection information, the color selection information, the third level selection information, and the fourth level selection information) to the multifunction device 50. As a result, in S214, the terminal-side reception unit 40 may receive all the selection information from the multifunction device 50. In S215, the control unit 30 may cause the portable terminal 10 to ring. Then, the user may be notified that reception (here, reception of all the selection information) is completed, and the user moves the portable terminal 10 away from the multifunction device 50. Then, the NFC communication session established in S210 may be disconnected.

Processes of S216 to S226 may be similar to those of S124 to S134 of Fig. 8. Processes of S216 to S226 may be carried out in accordance with all the selection information received in S214. That is, the display control unit 42 may cause the selection screen to be displayed in accordance with the function selection information (S216) and, when the function is designated (S220: YES), the selection unit 44 may select the designated function (S224). Next, the display control unit 42 may cause the selection screen to be displayed in accordance with the color selection information (S216) and, when the color selection information is designated (S220: YES), the selection unit 44 may select the designated color selection information (S224). Next, the display control unit 42 may cause the selection screen to be displayed in accordance with the third level selection information (S216). The remaining steps after the selection screen is displayed may be similar to those of the second embodiment.

In S228, the terminal-side transmission unit 46 may transmit all the setting data representing all the setting options selected in S224 to the multifunction device 50. After the process of S228, the portable terminal process may be completed.

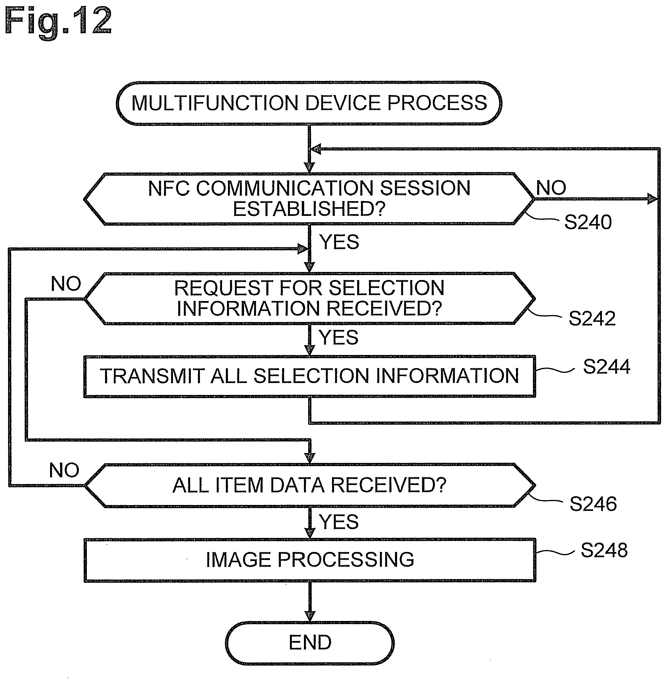

In another example embodiment, a multifunction device process of Fig. 12 may be carried out instead of the multifunction device process of Fig. 5. The process of S240 may be similar to that of S40 of Fig. 5. In S242, the device-side reception unit 84 may determine whether or not the information for requesting all the selection information has been received from the portable terminal 10 (see S212 of Fig. 11). If the information has been received, the device-side reception unit 84 may determine that the result of S242 is YES and the routine proceeds to S244. If the information has not been received, the device-side reception unit 84 may determine that the result of S242 is NO and the routine may proceed to S246.

In S244, the device-side transmission unit 82 may transmit all the selection information to the portable terminal 10, and the routine may return to S240. Although not illustrated in the flowchart, when all the selection information is transmitted in S244, the NFC communication session established in S240 may be disconnected.

In S246, the device-side reception unit 84 may determine whether or not all the item data has been received from the portable terminal 10 (see S228 of Fig. 11). If all the item data has been received, the device-side reception unit 84 may determine that the result of S246 is YES and the routine may proceed to S248. If not all the item data has been received, the device-side reception unit 84 may determine that the result of S246 is NO and the routine may proceed to S242. In S248, the process execution unit 86 may carry out image processing in a similar manner as in S54 of Fig. 5 in accordance with all the item data received in S246. After the process of S248, the multifunction device process may be completed.

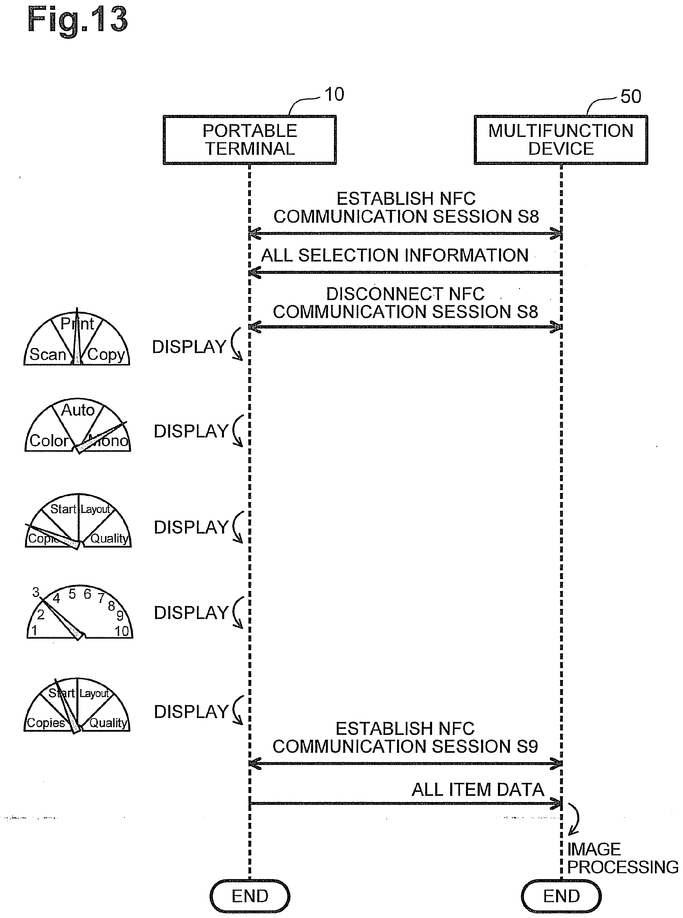

Next, an example of the third embodiment will be described with reference to Fig. 13. When the user moves the portable terminal 10 close to the multifunction device 50, a NFC communication session S8 may be established. In this case, the multifunction device 50 may transmit all the selection information using the NFC communication session S8 (S244 of Fig. 12). Therefore, the portable terminal 10 may receive all the selection information using the NFC communication session S8 (S214 of Fig. 11). Then, the NFC communication session S8 may be disconnected.

The portable terminal 10 may successively generate each selection screen in accordance with each piece of selection information, cause each selection screen to be successively displayed on the display unit 12 (S216 of Fig. 11), and select each setting option successively (S224 of Fig. 11). For example, the user may manipulate the determination button of the manipulation unit 14 in a state in which "Start" is designated (S220 of Fig. 11: YES, S222 of Fig. 11: YES). Then, when the user moves the portable terminal 10 close to the multifunction device 50, an NFC communication session S9 may be established (S226 of Fig. 11: YES, S240 of Fig. 12: YES). The portable terminal 10 may transmit all the item data representing all the selected setting options to the multifunction device 50 using the NFC communication session S9 (S228 of Fig. 11). Therefore, the multifunction device 50 may receive all the item data from the portable terminal 10 using the NFC communication session S9 (S246 of Fig. 12: YES). In this case, the multifunction device 50 may carry out image processing in accordance with all the item data received from the portable terminal 10 (and other default setting options) (S248 of Fig. 12).

As illustrated in Fig. 13, the multifunction device 50 may transmit all the selection information to the portable terminal 10 using the NFC communication session S8. The user may designate each setting option successively using the determination button of the portable terminal 10. Accordingly, in this embodiment, the user can reduce the number of times the portable terminal is moved within range of the multifunction device 50.

The function selection information and the color selection information are examples of a "first type of selection information" and a "second type of selection information", respectively. The NFC communication session S8 is an example of a "first communication session" and the NFC communication session S9 is an example of a "second communication session".

Although the embodiments of the present invention have been described in detail, it is to be understood that the embodiments are illustrative only and, therefore, do not limit the scope of the claims. Various changes and modifications of the embodiments are within the techniques described in the claims. Example modifications of the embodiments described above will be provided below.

The "image processing device" is not limited to the multifunction device 50. Indeed, other equipment that can carry out image processing (e.g., a printer, facsimile equipment, a copy machine, and a scanner) may be used. The "portable terminal" may be any device which is portable, such as, for example, a cellular phone, a smartphone, a PDA, a portable PC, a tablet PC, etc.

In the embodiments described above, the portable terminal 10 may be provided with the posture sensor 18 (e.g., a gyro sensor) which detects the orientation of the portable terminal 10 when the user tilts, rotates, or otherwise moves the portable terminal 10 to select a setting option. Instead of the posture sensor 18, the portable terminal 10 may be provided with, for example, an acceleration sensor which detects acceleration when the user shakes the portable terminal 10 to select the setting option. A "first operation" may be an operation to move the entire portable terminal 10, such as an operation to tilt, rotate, or shake the portable terminal 10.

The "first operation" for moving the entire portable terminal 10 may be any combination of plural operations. Further, the "first operation" may be a combination of a tilting operation and a shaking operation. For example, if the portable terminal 10 is in a portrait position, "Portrait" may be designated; if the portable terminal 10 is in the landscape position, "Landscape" may be designated; if the number of times the portable terminal 10 has been shaken is 0, "1-in-1" may be designated; and if the number of times the portable terminal 10 has been shaken is 1, "2-in-1" may be designated.

In the embodiments described above, the portable terminal 10 and the multifunction device 50 may carry out NFC communication. Instead of the NFC communication, another communication system, such as Transfer Jet, wireless LAN, infrared ray communication, and Bluetooth, may be used. Thus, Transfer Jet, wireless LAN, infrared ray communication and Bluetooth are each examples of a "wireless communication". Further, any communication system having a short-range similar to the range of an NFC communication may be used.

In the embodiments described above, the display control unit 42 may cause all of the plurality of options included in a single piece of selection information (e.g., the function selection information) to be displayed at the same time. However, only one or some of the plurality of options may be displayed. For example, the display control unit 42 may carry out the following control: if the portable terminal 10 is in a portrait position (i.e., a tilted angle to the right and left is within 45 degrees), "Print" is displayed; if the portable terminal 10 is tilted to the left at 45 to 180 degrees, only "Copy" is displayed; and if the portable terminal 10 is tilted to the right at 45 to 180 degrees, only "Scan" is displayed. Also, the display control unit 42 does not need to display all of numbers "1 to 10" as the number of "Copies" but some of the options may be displayed. For example, if the portable terminal 10 is tilted to the left, "1 to 3" may be displayed and, as the portable terminal 10 is tilted to the right, "2 to 4", "3 to 5" and so forth may be displayed successively.

In the embodiments described above, the units 40 to 48 and 80 to 88 may be implemented by software and/or by hardware, such as a logical circuit.

Although example embodiments are described above, the various features and steps may be combined, divided, omitted, rearranged, and/or augmented in any desired manner. For example, S15 may be omitted from the process of Fig. 4. Also, for example, S50 and S52 of Fig. 5 may be rearranged so that S52 is performed prior to S50. This disclosure should not be limited to the example embodiments described, but rather should have its scope determined by the claims that follow.

Further, the technical elements provided in the description or the drawings have technical application alone or in various combinations. Therefore, it is to be understood that the combinations of the claims at the filing are not restrictive. The techniques provided in the description or the drawings may achieve one or more objectives.

## Claims

1. A portable terminal (10) configured to wirelessly communicate with an image processing device (50), the portable terminal (10) comprising:
a display unit (12);
a wireless interface (16) configured to establish a bidirectional short-range wireless communication session with the image processing device (50) when the portable terminal (10) is within a radio wave range of the image processing device (50);
means for establishing (S10, S20, S116) a first communication session with the image processing device (50) when the portable terminal (10) is within the radio wave range of the image processing device (50), wherein the first communication session is disconnected when the portable terminal (10) is moved out of the radio wave range of the image processing device (50);
means for receiving (S14, S28, S110, S122) first selection information from the image processing device (50) during the first communication session, the first selection information including information which represents a plurality of first setting options for image processing performed by the image processing device (50);
means for displaying (S16, S112, S124, S216) a first selection screen on the display unit (12) of the portable terminal (10) in accordance with the first selection information, the first selection screen displaying at least one first setting option from among the plurality of first setting options;
means for designating (S16, S18, S112, S114) a particular first setting option from among the plurality of first setting options based on movement of the entire portable terminal (10); and
means for establishing (S20, S116) a second communication session with the image processing device (50) when the portable terminal is within the radio wave range of the image processing device (50) after the first communication session has been disconnected;
**characterized by**:
means for selecting (S22, S118) the particular first setting option when the second communication session is established after the particular first setting option has been designated; and
means for transmitting (S24, S120, S136, S228) first item data, which represents the selected particular first setting option, to the image processing device (50) during the second communication session.

2. The portable terminal (10) according to claim 1, wherein a first communication system, which may be a near field communication system, is used to receive the first selection information during the first communication session and transmit the first item data during the second communication session.

3. The portable terminal (10) according to claim 1 or 2, wherein the selection of the particular first setting option is triggered by the establishment of the second communication session.

4. The portable terminal (10) according to any one of claims 1 to 3, further comprising:
means for receiving (S122, S214) the first selection information and second selection information from the image processing device (50) during the first communication session, the second selection information including information which represents a plurality of second setting options related to the particular first setting option;
means for displaying (S124, S216) a second selection screen on the display unit (12) in accordance with the second selection information, the second selection screen displaying at least one second setting option from among the plurality of second setting options;
means for selecting (S132, S224) a particular second setting option from among the plurality of second setting options based on movement of the entire portable terminal (10); and
means for transmitting (S136, S228) second item data which represents the particular second setting option to the image processing device (50) during the second communication session.

5. The portable terminal (10) according to claim 4, further comprising:
means for selecting (S132, S224) the particular first setting option with the user manipulation of a button of the portable terminal (10) as a trigger in a state in which the first selection screen is displayed on the display unit (12); and
means for selecting (S132, S224) the particular second setting option with the user manipulation of a button of the portable terminal (10) as a trigger in a state in which the second selection screen is displayed on the display unit (12).

6. The portable terminal (10) according to any one of claims 1 to 5, further comprising:
means for displaying (S16, S112, S124, S216) the first selection screen on the display unit (12), to indicate one of the plurality of first setting options as a designated first setting option; and
means for updating (S16, S112, S124, S216) the first selection screen to indicate another one of the plurality of first setting options as the designated first setting option in accordance with a change in orientation of the portable terminal (10).

7. The portable terminal (10) according to any one of claims 1 to 6, further comprising:
means for generating (S16, S112, S124, S216) the first selection screen using a plurality of pieces of text data, wherein the plurality of pieces of text data represent the plurality of first setting options, respectively.

8. The portable terminal (10) according to any one of claims 1 to 7, further comprising:
a posture sensor (18) configured to detect a posture of the portable terminal (10);
means for selecting (S22, S118, S132, S224) the particular first setting option in accordance with the posture of the portable terminal (10) detected by the posture sensor (18).

9. A method of controlling a portable terminal (10) that communicates wirelessly with an image processing device (50), the method comprising:
establishing (S10, S20, S116) a first communication session with the image processing device (50) when the portable terminal (10) is within the radio wave range of the image processing device (50), wherein the first communication session is disconnected when the portable terminal (10) is moved out of the radio wave range of the image processing device (50);
receiving (S14, S28, S110, S122) first selection information from the image processing device (50) during the first communication session, the first selection information including information which represents a plurality of first setting options for image processing performed by the image processing device (50);
displaying (S16, S112, S124, S216) a first selection screen on a display unit (12) of the portable terminal (10) in accordance with the first selection information, the first selection screen displaying at least one first setting option from among the plurality of first setting options;
designating (S16, S18, S112, S114) a particular first setting option from among the plurality of first setting options based on movement of the entire portable terminal (10); and
establishing (S20, S116) a second communication session with the image processing device (50) when the portable terminal is within the radio wave range of the image processing device (50) after the first communication session has been disconnected;
**characterized by**:
selecting (S22, S118) the particular first setting option when the second communication session is established in a state where the particular first setting option has been designated; and
transmitting (S24, S120, S136, S228) first item data, which represents the selected particular first setting option, to the image processing device (50) during the second communication session.

10. The method of claim 9, wherein a first communication system is used to receive the first selection information during the first communication session and transmit the first item data during the second communication session.

11. The method of claim 10, wherein the first communication system is a near field communication system.

12. The method of any one of claims 9 to 11, wherein the selection of the particular first setting option is triggered by the establishment of the second communication session.

13. A computer-executable program comprising program code means that, when executed by a processor, cause a portable terminal (10) to perform all the steps of any one of claims 9 to 12.

## Patentansprüche

1. Tragbares Endgerät (10), das konfiguriert ist, um drahtlos mit einer Bildverarbeitungsvorrichtung (50) zu kommunizieren, wobei das tragbare Endgerät (10) Folgendes umfasst:
eine Anzeigeeinheit (12);
eine drahtlose Schnittstelle (16), die konfiguriert ist, um eine bidirektionale drahtlose Kommunikationssitzung mit kurzer Reichweite mit der Bildverarbeitungsvorrichtung (50) aufzubauen, wenn das tragbare Endgerät (10) in einem Funkwellenbereich der Bildverarbeitungsvorrichtung (50) ist;
Mittel zum Aufbauen (S10, S20, S116) einer ersten Kommunikationssitzung mit der Bildverarbeitungsvorrichtung (50), wenn das tragbare Endgerät (10) in dem Funkwellenbereich der Bildverarbeitungsvorrichtung (50) ist, wobei die erste Kommunikationssitzung getrennt wird, wenn das tragbare Endgerät (10) aus dem Funkwellenbereich der Bildverarbeitungsvorrichtung (50) bewegt wird;
Mittel zum Empfangen (S14, S28, S110, S122) von ersten Auswahlinformationen von der Bildverarbeitungsvorrichtung (50) während der ersten Kommunikationssitzung, wobei die ersten Auswahlinformationen Informationen umfassen, die eine Vielzahl von ersten Einstelloptionen zur Bildverarbeitung darstellen, die durch die Bildverarbeitungsvorrichtung (50) durchgeführt werden;
Mittel zum Anzeigen (S16, S112, S124, S216) eines ersten Auswahlfensters auf der Anzeigeeinheit (12) des tragbaren Endgeräts (10) gemäß den ersten Auswahlinformationen, wobei das erste Auswahlfenster mindestens eine erste Einstelloption aus der Vielzahl von ersten Einstelloptionen anzeigt;
Mittel zum Bestimmen (S16, S18, S112, S114) einer bestimmten ersten Einstelloption aus der Vielzahl von ersten Einstelloptionen basierend auf Bewegung des gesamten tragbaren Endgeräts (10); und
Mittel zum Festlegen (S20, S116) einer zweiten Kommunikationssitzung mit der Bildverarbeitungsvorrichtung (50), wenn das tragbare Endgerät in dem Funkwellenbereich der Bildverarbeitungsvorrichtung (50) ist, nachdem die erste Kommunikationssitzung getrennt wurde;
**gekennzeichnet durch**:
Mittel zum Auswählen (S22, S118) der bestimmten ersten Einstelloption, wenn die zweite Kommunikationssitzung festgelegt ist, nachdem die erste bestimmte Einstelloption bestimmt wurde; und
Mittel zum Übertragen (S24, S120, S136, S228) von ersten Elementdaten, die die ausgewählte bestimmte erste Einstelloption darstellen, an die Bildverarbeitungsvorrichtung (50) während der zweiten Kommunikationssitzung.

2. Tragbares Endgerät (10) nach Anspruch 1, wobei ein erstes Kommunikationssystem, das ein Nahfeldkommunikationssystem sein kann, verwendet wird, um die ersten Auswahlinformationen während der ersten Kommunikationssitzung zu empfangen und um die ersten Elementdaten während der zweiten Kommunikationssitzung zu übertragen.

3. Tragbares Endgerät (10) nach Anspruch 1 oder 2, wobei die Auswahl der bestimmten ersten Einstelloption durch die Festlegung der zweiten Kommunikationssitzung ausgelöst wird.

4. Tragbares Endgerät (10) nach einem der Ansprüche 1 bis 3, ferner umfassend:
Mittel zum Empfangen (S122, S214) der ersten Auswahlinformationen und zweiten Auswahlinformationen von der Bildverarbeitungsvorrichtung (50) während der ersten Kommunikationssitzung, wobei die zweiten Auswahlinformationen Informationen umfassen, die eine Vielzahl von zweiten Einstelloptionen in Zusammenhang mit der bestimmten ersten Einstelloption darstellen;
Mittel zum Anzeigen (S124, S216) eines zweiten Auswahlfensters auf der Anzeigeeinheit (12) gemäß den zweiten Auswahlinformationen, wobei das zweite Auswahlfenster mindestens eine zweite Einstelloption aus der Vielzahl von zweiten Einstelloptionen anzeigt;
Mittel zum Auswählen (S132, S224) einer bestimmten zweiten Einstelloption aus der Vielzahl von zweiten Einstelloptionen basierend auf Bewegung des gesamten tragbaren Endgeräts (10); und
Mittel zum Übertragen (S136, S228) von zweiten Elementdaten, die die bestimmte zweite Einstelloption darstellen, zu der Bildverarbeitungsvorrichtung (50) während der zweiten Kommunikationssitzung.

5. Tragbares Endgerät (10) nach Anspruch 4, ferner umfassend:
Mittel zum Auswählen (S132, S224) der bestimmten ersten Einstelloption mit der Betätigung eines Knopfs des tragbaren Endgeräts (10) durch einen Benutzer als einen Auslöser in einem Zustand, in dem das zweite Auswahlfenster auf der Anzeigeeinheit (12) angezeigt wird; und
Mittel zum Auswählen (S132, S224) der bestimmten zweiten Einstelloption mit der Betätigung eines Knopfs des tragbaren Endgeräts (10) durch einen Benutzer als einen Auslöser in einem Zustand, in dem das zweite Auswahlfenster auf der Anzeigeeinheit (12) angezeigt wird.

6. Tragbares Endgerät (10) nach einem der Ansprüche 1 bis 5, ferner umfassend:
Mittel zum Anzeigen (S16, S112, S124, S216) des ersten Auswahlfensters auf der Anzeigeeinheit (12), um eine der Vielzahl von ersten Einstelloptionen als eine bestimmte erste Einstelloption anzugeben; und
Mittel zum Aktualisieren (S16, S112, S124, S216) des ersten Auswahlfensters, um eine andere der Vielzahl von ersten Einstelloptionen als die bestimmte erste Einstelloption gemäß einer Veränderung der Ausrichtung des tragbaren Endgeräts (10) anzugeben.

7. Tragbares Endgerät (10) nach einem der Ansprüche 1 bis 6, ferner umfassend:
Mittel zum Erzeugen (S16, S112, S124, S216) des ersten Auswahlfensters unter Verwendung einer Vielzahl von Textdatenstücken, wobei die Vielzahl von Textdatenstücken jeweils die Vielzahl von ersten Einstelloptionen darstellen.

8. Tragbares Endgerät (10) nach einem der Ansprüche 1 bis 7, ferner umfassend:
einen Stellungssensor (18), der konfiguriert ist, um eine Stellung des tragbaren Endgeräts (10) zu erfassen;
Mittel zum Auswählen (S22, S118, S132, S224) der bestimmten ersten Einstelloption gemäß der Stellung des tragbaren Endgeräts (10), die durch den Stellungssensor (18) erfasst wird.

9. Verfahren des Steuerns eines tragbaren Endgeräts (10), das drahtlos mit einer Bildverarbeitungsvorrichtung (50) kommuniziert, wobei das Verfahren Folgendes umfasst:
Aufbauen (S10, S20, S116) einer ersten Kommunikationssitzung mit der Bildverarbeitungsvorrichtung (50), wenn das tragbare Endgerät (10) in dem Funkwellenbereich der Bildverarbeitungsvorrichtung (50) ist, wobei die erste Kommunikationssitzung getrennt wird, wenn das tragbare Endgerät (10) aus dem Funkwellenbereich der Bildverarbeitungsvorrichtung (50) bewegt wird;
Empfangen (S14, S28, S110, S122) von ersten Auswahlinformationen von der Bildverarbeitungsvorrichtung (50) während der ersten Kommunikationssitzung, wobei die ersten Auswahlinformationen Informationen umfassen, die eine Vielzahl von ersten Einstelloptionen zur Bildverarbeitung darstellen, die durch die Bildverarbeitungsvorrichtung (50) durchgeführt wird;
Anzeigen (S16, S112, S124, S216) eines ersten Auswahlfensters auf einer Anzeigeeinheit (12) des tragbaren Endgeräts (10) gemäß den ersten Auswahlinformationen, wobei das erste Auswahlfenster mindestens eine erste Einstelloption aus der Vielzahl von ersten Einstelloptionen anzeigt;
Bestimmen (S16, S18, S112, S114) einer bestimmten ersten Einstelloption aus der Vielzahl von ersten Einstelloptionen basierend auf Bewegung des gesamten tragbaren Endgeräts (10); und
Festlegen (S20, S116) einer zweiten Kommunikationssitzung mit der Bildverarbeitungsvorrichtung (50), wenn das tragbare Endgerät in dem Funkwellenbereich der Bildverarbeitungsvorrichtung (50) ist, nachdem die erste Kommunikationssitzung getrennt wurde;
**gekennzeichnet durch**:
Auswählen (S22, S118) der bestimmten ersten Einstelloption, wenn die zweite Kommunikationssitzung in einem Zustand festgelegt ist, in dem die erste bestimmte Einstelloption bestimmt wurde; und
Übertragen (S24, S120, S136, S228) von ersten Elementdaten, die die ausgewählte bestimmte erste Einstelloption darstellen, an die Bildverarbeitungsvorrichtung (50) während der zweiten Kommunikationssitzung.

10. Verfahren nach Anspruch 9, wobei ein erstes Kommunikationssystem verwendet wird, um die ersten Auswahlinformationen während der ersten Kommunikationssitzung zu empfangen und um die ersten Elementdaten während der zweiten Kommunikationssitzung zu übertragen.

11. Verfahren nach Anspruch 10, wobei das erste Kommunikationssystem ein Nahfeldkommunikationssystem ist.

12. Verfahren nach einem der Ansprüche 9 bis 11, wobei die Auswahl der bestimmten ersten Einstelloption durch die Festlegung der zweiten Kommunikationssitzung ausgelöst wird.

13. Computerausführbares Programm, umfassend ein Programmcodemittel, das, wenn es durch einen Prozessor ausgeführt wird, ein tragbares Endgerät (10) dazu veranlasst, all die Schritte nach einem der Ansprüche 9 bis 12 durchzuführen.

## Revendications

1. Terminal portable (10) configuré pour communiquer sans fil avec un dispositif de traitement d'image (50), le terminal portable (10) comprenant :
une unité d'affichage (12) ;
une interface sans fil (16) configurée pour établir une session de communication sans fil de courte portée bidirectionnelle avec le dispositif de traitement d'image (50) lorsque le terminal portable (10) se trouve dans une portée d'onde radio du dispositif de traitement d'image (50) ;
un moyen destiné à établir (S10, S20, S116) une première session de communication avec le dispositif de traitement d'image (50) lorsque le terminal portable (10) se trouve dans la portée d'onde radio du dispositif de traitement d'image (50), la première session de communication étant déconnectée lorsque le terminal portable (10) sort de la portée d'onde radio du dispositif de traitement d'image (50) ;
un moyen destiné à recevoir (S14, S28, S110, S122) des premières informations de sélection depuis le dispositif de traitement d'image (50) pendant la première session de communication, les premières informations de sélection comprenant des information qui représentent une pluralité de premières options de réglage pour un traitement d'image effectué par le dispositif de traitement d'image (50) ;
un moyen destiné à afficher (S16, S112, S124, S216) un premier écran de sélection sur l'unité d'affichage (12) du terminal portable (10) en conformité avec les premières informations de sélection, le premier écran de sélection affichant au moins une première option de réglage parmi la pluralité de premières options de réglage ;
un moyen destiné à désigner (S16, S18, S112, S114) une première option de réglage particulière parmi la pluralité de premières options de réglage sur la base d'un déplacement du terminal portable (10) dans son ensemble ; et
un moyen destiné à établir (S20, S116) une deuxième session de communication avec le dispositif de traitement d'image (50) lorsque le terminal portable se trouve dans la portée d'onde radio du dispositif de traitement d'image (50) après la déconnexion de la première session de communication ;
**caractérisé par**
un moyen destiné à sélectionner (S22, S118) la première option de réglage particulière lorsque la deuxième session de communication est établie après la conception de la première option de réglage particulière ; et
un moyen destiné à transmettre (S24, S120, S136, S228) des premières données d'élément, qui représentent la première option de réglage particulière sélectionnée, au dispositif de traitement d'image (50) pendant la deuxième session de communication.

2. Terminal portable (10) selon la revendication 1, dans lequel un premier système de communication, qui peut être un système de communication en champ proche, est utilisé pour recevoir les premières informations de sélection pendant la première session de communication et transmettre les premières données d'élément pendant la deuxième session de communication.

3. Terminal portable (10) selon la revendication 1 ou 2, dans lequel la sélection de la première option de réglage particulière est déclenchée par l'établissement de la deuxième session de communication.

4. Terminal portable (10) selon l'une quelconque des revendications 1 à 3, comprenant en outre :
un moyen destiné à recevoir (S122, S214) les premières informations de sélection et des deuxièmes informations de sélection depuis le dispositif de traitement d'image (50) pendant la première session de communication, les deuxièmes informations de sélection comprenant des informations qui représentent une pluralité de deuxièmes options de réglage liées à la première option de réglage particulière ;
un moyen destiné à afficher (S124, S216) un deuxième écran de sélection sur l'unité d'affichage (12) en conformité avec les deuxièmes informations de sélection, le deuxième écran de sélection affichant au moins une deuxième option de réglage parmi la pluralité de deuxièmes options de réglage ;
un moyen destiné à sélectionner (S132, S224) une deuxième option de réglage particulière parmi la pluralité de deuxièmes options de réglage sur la base du déplacement du terminal portable (10) dans son ensemble ; et
un moyen destiné à transmettre (S136, S228) des deuxièmes données d'élément qui représentent la deuxième option de réglage particulière au dispositif de traitement d'image (50) pendant la deuxième session de communication.

5. Terminal portable (10) selon la revendication 4, comprenant en outre :
un moyen destiné à sélectionner (S132, S224) la première option de réglage particulière avec la manipulation d'utilisateur d'un bouton du terminal portable (10) en tant que déclencheur dans un état dans lequel le premier écran de sélection est affiché sur l'unité d'affichage (12) ; et
un moyen destiné à sélectionner (S132, S224) la deuxième option de réglage particulière avec la manipulation d'utilisateur d'un bouton du terminal portable (10) en tant que déclencheur dans un état dans lequel le deuxième écran de sélection est affiché sur l'unité d'affichage (12).

6. Terminal portable (10) selon l'une quelconque des revendications 1 à 5, comprenant en outre :
un moyen destiné à afficher (S16, S112, S124, S216) le premier écran de sélection sur l'unité d'affichage (12), pour indiquer l'une de la pluralité de premières options de réglage en tant que première option de réglage désignée ; et
un moyen destiné à actualiser (S16, S112, S124, S216) le premier écran de sélection pour indiquer une autre de la pluralité de premières options de réglage en tant que première option de réglage désignée en conformité avec un changement d'orientation du terminal portable (10).

7. Terminal portable (10) selon l'une quelconque des revendications 1 à 6, comprenant en outre :
un moyen destiné à générer (S16, S112, S124, S216) le premier écran de sélection à l'aide d'une pluralité d'éléments de données de texte, la pluralité d'éléments de données de texte représentant la pluralité de premières options de réglage, respectivement.

8. Terminal portable (10) selon l'une quelconque des revendications 1 à 7, comprenant en outre :
un capteur de posture (18) configuré pour détecter une posture du terminal portable (10) ;
un moyen destiné à sélectionner (S22, S118, S132, S224) la première option de réglage particulière en conformité avec la posture du terminal portable (10) détectée par le capteur de posture (18).

9. Procédé de commande d'un terminal portable (10) qui communique sans fil avec un dispositif de traitement d'image (50), le procédé comprenant :
l'établissement (S10, S20, S116) d'une première session de communication avec le dispositif de traitement d'image (50) lorsque le terminal portable (10) se trouve dans une portée d'onde radio du dispositif de traitement d'image (50), la première session de communication étant déconnectée lorsque le terminal portable (10) sort de la portée d'onde radio du dispositif de traitement d'image (50) ;
la réception (S14, S28, S110, S122) de premières informations de sélection depuis le dispositif de traitement d'image (50) pendant la première session de communication, les premières informations de sélection comprenant des informations qui représentent une pluralité de premières options de réglage pour un traitement d'image effectué par le dispositif de traitement d'image (50) ;
l'affichage (S16, S112, S124, S216) d'un premier écran de sélection sur une unité d'affichage (12) du terminal portable (10) en conformité avec les premières informations de sélection, le premier écran de sélection affichant au moins une première option de réglage parmi la pluralité de premières options de réglage ;
la désignation (S16, S18, S112, S114) d'une première option de réglage particulière parmi la pluralité de premières options de réglage sur la base du déplacement du terminal portable (10) dans son ensemble ; et
l'établissement (S20, S116) d'une deuxième session de communication avec le dispositif de traitement d'image (50) lorsque le terminal portable se trouve dans la portée d'onde radio du dispositif de traitement d'image (50) après la déconnexion de la première session de communication ;
**caractérisé par** :
la sélection (S22, S118) de la première option de réglage particulière lorsque la deuxième session de communication est établie dans un état où la première option de réglage particulière a été désignée ; et
la transmission (S24, S120, S136, S228) de premières données d'élément, qui représentent la première option de réglage particulière, au dispositif de traitement d'image (50) pendant la deuxième session de communication.

10. Procédé de la revendication 9, dans lequel un premier système de communication est utilisé pour recevoir les premières informations de sélection pendant la première session de communication et transmettre les premières données d'élément pendant la deuxième session de communication.

11. Procédé de la revendication 10, dans lequel le premier système de communication est un système de communication en champ proche.

12. Procédé de l'une quelconque des revendications 9 à 11, dans lequel la sélection de la première option de réglage particulière est déclenchée par l'établissement de la deuxième session de communication.

13. Programme exécutable par ordinateur comprenant un moyen de code de programme qui, lorsqu'il est exécuté par un processeur, amène un terminal portable (10) à réaliser toutes les étapes de l'une quelconque des revendications 9 à 12.
